# EUROPÄISCHE PATENTSCHRIFT

(11) **EP 4 200 541 B1**
(45) Veröffentlichungstag und Bekanntmachung des Hinweises auf die Patenterteilung: **07.05.2025**
(21) Anmeldenummer: 21754918.7
(22) Anmeldetag: 02.08.2021
(51) Int. Cl.: F16H 7/06, F16H 19/04, F16H 19/06, F16H 55/08, F16H 55/26

(54) **LINEARER ZAHNKETTENTRIEB**
LINEAR TOOTHED CHAIN GEAR
ENGRENAGE À CHAÎNE DENTÉE LINÉAIRE

(30) Priorität: 23.08.2020 DE 102020005145
(43) Veröffentlichungstag der Anmeldung: 28.06.2023
(73) Patentinhaber: Brehm, Bernhard, 75265 Calw-Stammheim (DE); Just, Manfred, 76709 Kronau (DE); Fetzner, Roland, 76646 Bruchsal (DE)
(72) Erfinder: BREHM, Bernhard, 75365 Calw-Stammheim (DE)
(74) Vertreter: Spachmann, Holger
(86) Internationale Anmeldenummer: PCT/EP2021/000089
(87) Internationale Veröffentlichungsnummer: WO 2022/042870

(56) Entgegenhaltungen:
- EP-A2- 1 566 568
- DE-A1- 102005 027 328
- US-A- 3 399 578
- US-A- 5 950 513

## Beschreibung

Die Erfindung betrifft einen linearen Zahnkettentrieb zur Steuerung von Anlagen verschiedenster technischer Bereiche auch im Schwerlastbereich, zum Beispiel für Lasten- und Personenaufzüge, den Materialtransport in Hochregallagern und dazu gehörige Transportmittel, wie Transportbänder, Gabelstapler, Seilbahnen, Hängebahnen etc.

Es ist eine Vielzahl von Antriebstechniken bekannt, so zum Beispiel Seilantriebe, Zahnriemenantriebe, Rollenkettenantriebe, Gewindespindelantriebe, Linearmotorenantriebe sowie Zahnkettentriebe.

So ist aus der Offenlegungsschrift DE 10 2005 027 328 A1 eine zweiseitig verzahnte Zahnkette bekannt, die als eine endlose Schleife ausgebildet und zum Antriebseingriff mit zwei oder mehreren Kettenrädern innerhalb der Schleife und einem oder mehreren Kettenrädern außerhalb der Schleife geeignet ist. Bei den herkömmlichen zweiseitig verzahnten Ketten wird in den inneren Abschnitten der Stiftlöcher der äußeren Kettenlaschen eine Spannung erzeugt, wenn die Verbindungsstifte in die Stiftlöcher eingepasst werden. Eine Kollision der Zähne der äußeren Kettenlaschen mit den Zähnen eines Abtriebskettenrades übt ebenfalls eine Belastung auf den inneren Umfangsflächenabschnitts der Stiftlöcher aus. Die Spannung und die Belastung erzeugen einen synergistischen Effekt, der die Festigkeit der äußeren Kettenlaschen vermindert. Die Aufgabe der Erfindung besteht darin die oben nur teilweise erwähnten Probleme zu lösen und eine zweiseitig verzahnte Kette bereit zu stellen, bei der die Abnahme der Festigkeit an den mittleren Abschnitten der äußeren Kettenlaschen verhindert und die Rotationsdauerfestigkeit der Zahnkette erhöht wird. Danach umfasst die zweiseitig verzahnte Kette mit einer Vielzahl von Kettenlaschen, die jeweils ein Paar von Stiftlöchern, ein Paar von Laschenzähnen, die in eine erste Richtung vorstehen, und eine ebene Rückenfläche aufweisen, die in eine zu der ersten Richtung entgegengesetzte Richtung zeigt, wobei die Kettenlaschen, in der Breitenrichtung der Kette gesehen, äußere Kettenlaschen aufweisen, bei der die Kettenlaschen überlappend angeordnet sind und in einer endlosen Schleife mittels Verbindungsstiften miteinander verbunden sind, die sich durch die Stiftlöcher hindurch erstrecken und an den äußeren Kettenlaschen fixiert sind, wobei die Kettenlaschen einen ersten Satz von Kettenlaschen, der die äußeren und die angrenzenden äußeren Kettenlaschen umfasst, und einen zweiten Satz von Kettenlaschen aufweisen, die zwischen den äußeren Kettenlaschen angeordnet sind, wobei die Zähne eines Satzes zum Inneren der Schleife hin vorstehen und die Zähne des anderen Satzes zum Außenbereich der Schleife hin vorstehen und die Höhen der Rücken der äußeren Kettenlaschen größer sind als die Höhen der Rücken der inneren Kettenlaschen.

Die EP 1 566 568 B1 beinhaltet eine Kettenrad- Laschenketten - Paarung für Zugmittelgetriebe. Bei den bekannten Ketten erfolgt die Verbindung der Metalllaschen über ein herkömmliches 1-Zapfen- System, dessen Verbindungszapfen nach Art eines Rundbolzens ausgebildet ist. Daneben ist auch ein 2- Zapfen- System nach Art eines sogenannten zweiteiligen Wiegegelenkes bekannt. Die Nachteile dieser Systeme sind u. a. breitere Kettenformen sowie Übertragung hoher Kräfte auf Kettenräder mit großem Durchmesser. Die Aufgabe der offenbarten Erfindung besteht darin eine Metalllasche zur Bildung einer hochbeanspruchbaren Laschenkette zu schaffen, die ohne Vergrößerung der Baubreite sehr große Zugkräfte und auch über kleine Kettenräder übertragen werden kann. Die Aufgabe wird ausgehend von einer Paarung gemäß dem Oberbegriff des Anspruchs 1 in Verbindung mit dessen kennzeichnenden Merkmalen gelöst. Beansprucht wird danach, dass durch zwei aufeinanderfolgende Laschen gebildeten korrespondierenden Eingriffslücken der Laschenkette solche Laschenflanken aufweisen, die geometrisch auf eine Evolventenverzahnung oder Geradverzahnung des Kettenrades abgestimmt sind, worüber der Eingriff von Zähnen des Kettenrades erfolgt, wogegen eine jeweilige Ausnehmung einen Freiraum für einen Zahn des Kettenrades bildet.

Von der Firma Renold GmbH werden eine Vielzahl von hochwertigen, beidseitig verzahnten und flexiblen Ketten angeboten. Dabei sind die angebotenen beidseitigen Antriebs- und Abtriebsverzahnungen der Ketten grundsätzlich identisch. Auch bietet die Firma individuell entwickelte Antriebstechniken an, bei denen eine Verzahnungsseite der beidseitig verzahnten Ketten in Antriebsräder mit einer Evolventenverzahnung eingreift, wodurch im Bereich des Antriebs bereits eine gewisse Stoß- und Spielfreiheit beim Wälzen der Kette in dem Antriebsrad erreicht wird. Bisher ungelöst ist jedoch in der Praxis der abtriebsseitige Eingriff der Außenverzahnung der beidseitig verzahnten und flexiblen Ketten in Übertragungstechniken von beispielsweise Zahnstangen.

In der US 5 950 513 A wird ein Riementrieb mit beidseitiger Verzahnung vorgestellt.

Daneben betrifft die US 3 399 578 A einen Kettentrieb.

Zusammenfassend haben die bekannten Kettenantriebstechniken unter anderem den Nachteil, dass die Zahnketten abtriebsseitig häufig in Zahnstangen geführt werden, wobei bei einer Spitzverzahnung immer nur 1 Zahn, maximal 1,5 oder 2 Zähne eingreifen können. Das führt zu einer geringeren Stabilität bei der Kettenführung. Die Kettenglieder haben ein zu großes Spiel der Kettenglieder in den Zähnen der Zahnstangen, wodurch die Ketten an den Gelenken verschleißen und sich ausdehnen, was wiederum zu Ungenauigkeiten in den Einstellungen führt. So dehnen sich Seile beispielsweise bei Seilbahnen und können reißen. Es sind regelmäßige Sicherheitsprüfungen erforderlich, bei denen Ketten oder Seile etc. ausgetauscht werden müssen, die Zeit-, Material- und Kostenaufwendige Abläufe zur Folge haben. Es war deshalb Aufgabe der Erfindung einen linearen Kettentrieb zu finden, mit dem, besonders auch abtriebsseitig, eine spiel- und schlupffreie und geräuscharme translatorische Bewegung der Zahnkette zu erzeugen ist, die eine lineare Bewegung der Zahnkette in starrer und beweglicher Form ermöglicht, eine erhebliche Verbesserung des Wirkungsgrades mit nur einem Prozent Verlust gewährleistet und bei dem die Zahnkette ohne zusätzliche Positionsmesseinrichtung direkt an einen Antriebsmotor anzuschließen ist.

Die Aufgabe wird mit den Merkmalen des Anspruchs 1 gelöst, indem die Zahnflanken der Zahnkette abtriebsseitig mit einer Evolventen- Verzahnung ausgestattet sind, die in, abtriebsseitig zur Zahnkette gerichteten, auch in Kurvenbereichen symmetrischen Aufnahmeöffnungen eines Transportelementes wälzen, das Transportelement auf einer, den Aufnahmeöffnungen gegenüberliegenden Außenfläche, quer zu seiner Laufrichtung verlaufende, voneinander beabstandete Schlitze aufweist, während des Bewegungsablaufes im Linearbereich des Kettentriebs die abtriebsseitigen Glieder der Zahnkette mit der Evolventen- Verzahnung gespreizt sind, im Bogenbereich deckungsgleich zueinander verlaufen und im Übergang vom Bogenbereich zum Linearbereich die abtriebsseitigen Glieder der Zahnkette stoß- und spielfrei in den Aufnahmeöffnungen des Transportelementes wälzen und in Kombination und gleichzeitig die antriebsseitigen Glieder der Zahnkette mit der Spitzverzahnung (1.2.1) deckungsgleich und im Bogenbereich gespreizt zueinander verlaufen, und dass im Übergang vom Bogenbereich zum Linearbereich die antriebsseitigen Glieder der Zahnkette stoß- und spielfrei in der Evolventen- Verzahnung eines oder mehrerer Zahnkettenräder wälzen.

Besonders hervorzuheben ist die Konstruktion, die die Kettenzähne, durch die evolventen Zahnflanken, abtriebsseitig ohne Unterbrechung der Bewegungen in den Aufnahmeöffnungen des Transportelementes wälzen lassen. Im Gegensatz zu einer Spitzverzahnung an der Kette und deren Eingriff in eine übliche Zahnstange, wälzen sich die Zähne bei der erfindungsgemäßen Lösung auf der jeweiligen Aufnahmeöffnungsfläche des Transportelementes ohne Rucken oder Stoßen von einer Aufnahmeöffnung zur anderen. Diese Bewegung wird durch das Spreizen und übereinander Lagern der Zähne im Linear- oder Bogenbereich sowie an deren Übergängen erreicht. Die Zähne haben keine Spielfreiheit mehr, unabhängig davon, ob sie sich im Linearbereich oder in einem Bogenbereich der Zahnkette bewegen. Die Zahnformen sind antriebsseitig an die bekannte Evolventenverzahnung der Kettenantriebsräder und in Kombination gleichzeitig an die abtriebseitige optimale Evolventenverzahnung, der doppelseitig verzahnten Zahnkette angelegt. Das heißt, es ist antriebs- und abtriebsseitig ein hundertprozentiges Wälzen der Zahnflanken gewährleistet, ohne, dass ein Flankenspiel entstehen kann. Es findet keine Gleitreibung statt, auch nicht in den Gelenken, da zum Beispiel ein Wiegegelenk nicht gleitet sondern wälzt.

Die Starrheit des Transportgliedes wird darüber hinaus optimiert durch, in einer, den Aufnahmeöffnungen gegenüberliegenden Außenfläche angeordnete, quer zu seiner Laufrichtung verlaufende, voneinander beabstandete Schlitze, die eine, je nach Anwendungsfall, vorteilhafte Biegsamkeit des Transportelements gewährleistet und außerdem die Dehnung der Kette verhindert. Auch ein konvexer und konkaver Einsatz des Transportelementes ist möglich. Besonders günstig erweist sich die Bewegung der Kette auf einem konkav gebogenen Transportelement. Die Kette ist bei dieser Form in dem Transportelement durch die gegebene Vorspannung sehr gut zu halten. Außerdem gestattet das erfindungsgemäße Transportelement über einen, nach Bedarf erforderlich langen Linearbereich einen geräuscharmen Transport und ermöglicht diesen in 1m/sec bis 3m/sec und in einer Maximalvariante in 40m/s, also in wesentlich kürzerer Zeit als mit traditioneller Technik. Bei Auswahl einer günstigen Zähnezahl, beispielsweise z= 30 und einem Raddurchmesser von 86 mm erreicht man beispielsweise darüber hinaus auch eine höhere Genauigkeit und Optimierung des Polygoneffektes auf ca. 12/3 mikro m.

Die Zahnflanken der Zahnkette sind abtriebsseitig erfindungsgemäß mit der Evolventen- Verzahnung und die Zahnflanken der Zahnkette abtriebsseitig mit gemäß dem Stand der Technik einer Spitzverzahnung ausgestattet ist. Die Kombination der bereits bekannten Spitzverzahnung antriebsseitig und der erfindungsgemäßen Evolventen- Verzahnung der Kette abtriebsseitig gewährleistet die Nutzung des neuen Transportelements einerseits mit den positiven Wirkungen der stoß- und spielfreien translatorischen Bewegung der Zahnketten. Andererseits werden, während des Bewegungsablaufes im Linearbereich des Kettentriebs, die antriebsseitigen Glieder der Zahnkette mit der Spitzverzahnung deckungsgleich und im Bogenbereich gespreizt zueinander verlaufen und im Übergang vom Bogenbereich zum Linearbereich können die antriebsseitigen Glieder der Zahnkette stoß- und spielfrei in der Evolventen- Verzahnung der Zahnkettenräder wälzen. Durch das stoß- und spielfreie Wälzen der abtriebseitigen Evolventenverzahnung der Kette in dem erfindungsgemäß biegsamen Transportelement wird demzufolge auch ein erheblich höherer Wirkungsgrad des Kettentriebs erreicht. Die Kombination der unterschiedlichen Zahnformen an einer Zahnkette gestattet nicht nur antriebsseitig über die Zahnkettenräder zum Antriebsmotor eine spielfreie Verbindung zum Motor sondern vor allem auch abtriebsseitig zu dem Transportelement und den mit diesem angetriebenen Maschinen und Aggregaten.

Diese erfindungsgemäße Konstruktion erspart dem Nutzer auch eine bisher erforderliche und komplizierte Positionierung der Kette zum Motor. Der Einsatz einer Positionsmesseinrichtung und der zu deren Nutzung erforderliche Zeit- und Kostenaufwand entfällt. Sie kann direkt am Motor durchgeführt werden, weil die spiel- und stoßfreie Linearbewegung der erfindungsgemäßen abtriebseitigen Zahnkettengestaltung in Kombination mit dem erfindungsgemäßen Transportglied eine direkte Verbindung des linearen Zahnkettentriebs zum Motor ermöglicht.

Das Transportelement ist ein weitest gehend starres Band, in linearer oder gebogener Form ist, mit einerseits symmetrischen, nach innen und/oder außen offenen Aufnahmeöffnungen und/oder andererseits auf dessen gegenüberliegenden Außenfläche mit, quer zu seiner Laufrichtung verlaufenden, voneinander beabstandeten Schlitzen ausgestattet und in einer starren sowie beweglichen Form nutzbar ist, wobei bei der starren Form das Transportelement feststeht und die Zahnkette mit dem Antrieb um die Zahnkettenräder zu bewegen ist und sich bei der beweglichen Form das Transportelement bewegt und die Zahnkette am Ort um die Zahnkettenräder zu bewegen ist. Diese variablen Ausführungsformen des Transportelements ermöglichen eine umfassende Nutzugsmöglichkeit des erfindungsgemäßen linearen Kettentriebs.

Gemäß einer bevorzugten Ausführungsform ist das Transportelement mit den Aufnahmeöffnungen in der Fläche eines mehreckigen Profilteils eingeformt. Besonders bei einem endlosen Linearantrieb erhält man auf diese Weise einen stabilen spiel- und stossfreien, sowie lärmarmen Kettentrieb. Diese Ausführungsform ist beispielsweise für einen endlosen Linearbetrieb besonders vorteilhaft. Sie eignet sich für Anwendungen, bei denen hoher und ausdauernder Kraftaufwand gepaart mit einer hohen Genauigkeit erforderlich ist. So zum Beispiel ist diese Ausführungsvariante für den Einsatz in Gabelstaplern, in Hebebühnen, für Transporte in Hochregallagern, aber auch für Präzisionsanwendungen beispielsweise für 3D-Drucker, in CNC - Werkzeugmaschinen und nicht zuletzt bei Robotern einsetzbar.

Gemäß einer bevorzugten Ausführungsform ist das Transportelement mit den Aufnahmeöffnungen in dreidimensionaler Richtung, separat in horizontaler oder vertikaler Richtung oder mit angepassten Weichen von einer horizontalen Richtung in eine vertikale Richtung und umgekehrt anzuordnen und darauf der lineare Kettentrieb zu bewegen. Die Variabilität des Transportelements ist erkennbar vielgestaltig. Sie gestattet den räumlich direkten Kontakt des Kettentriebs mit dem Antrieb des Motors. Je nach Anwendungsfall kann der lineare Kettentrieb zum Beispiel mit vier synchronisierten Antrieben auf einfache Weise übergangslos vertikal und horizontal gefahren werden. Dazu erforderliche Weichen sind durch verschieben der Bogen- oder Geradteile in der Z- Achse realisierbar.

Die Transportelemente können mit ihren Aufnahmeöffnungen und/oder Schlitzen an alle Kettenformen und -breiten angepasst werden.

Die Erfindung soll nachstehend anhand von Ausführungs- bzw. Anwendungsbeispielen beschrieben werden, die in den Zeichnungen näher dargestellt sind. Dabei zeigen:
- Fig.1: Seitenansicht eines linearen Kettentriebs mit zwei Getriebeantriebsrädern, einer beidseitig verzahnten Kette und einem horizontalen Transportelement,
- Fig.2: Draufsicht auf ein Transportelement mit Aufnahmeöffnungen,
- Fig.3: untere Ansicht des Transportelements aus Fig.2 mit Schlitzen,
- Fig.4: Seitenansicht eines linearen Kettentriebs mit zwei Getriebeantriebsrädern, einer beidseitig verzahnten Kette und einem konvex eingreifenden Transportelement,
- Fig.5: Prinzip- Darstellung eines dreidimensionalen Transportelements mit prinzipieller Weichendarstellung
- Fig.6: Prinzip- Darstellung eines endlosen Lineartriebs mit Transportelement innerhalb einer Fläche eines Profilteils.

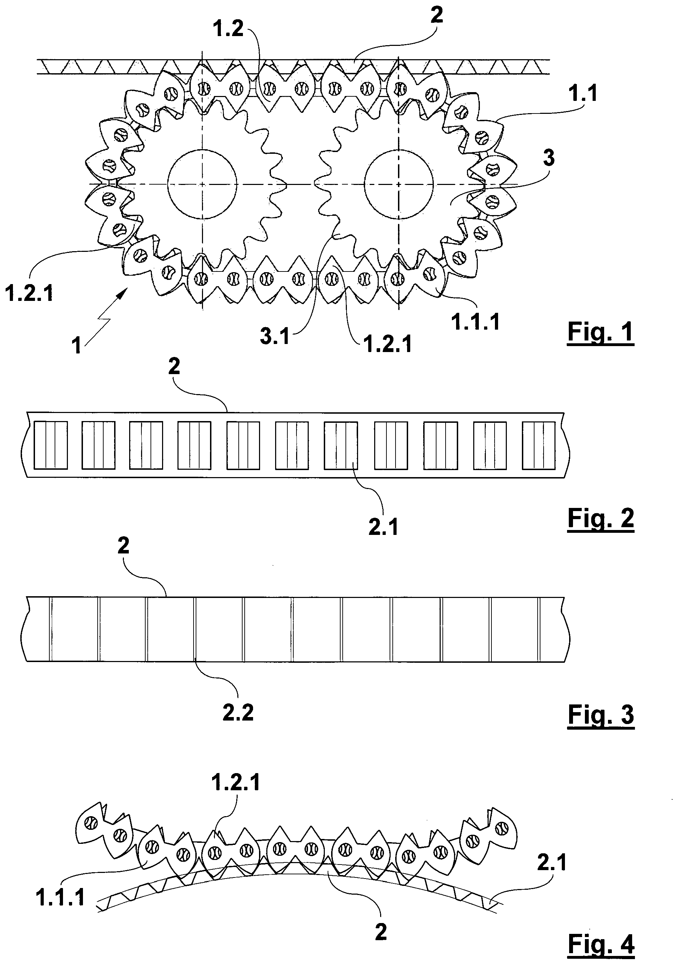

Ein Ausführungsbeispiel zeigt, gemäß Fig.1, einen linearen Zahnkettentrieb, der aus zwei nebeneinander laufenden Antriebszahnräder 3 mit Evolventenverzahnung 3.1, einer beidseitig biegsamen und verzahnten Zahnkette 1 aus vorzugsweise hochveredeltem Stahl, mit antriebsseitiger Spitzverzahnung 1.1.2, die nach dem Stand der Technik in die Evolventenverzahnung 3.1 der beiden Antriebszahnräder 3 eingreifen und in Kombination mit einer abtriebsseitigen Evolventenverzahnung 1.1.1, die erfindungsgemäß in die Aufnahmeöffnungen 2.1 eines geradlinig ausgeführten Transportelements 2 eingreifen. Die Kette 1 ist vorzugsweise mit Zahngliedern ausgestattet, die über Wiegegelenke durch Gelenkzapfen miteinander verbunden sind und somit nach beiden Seiten einen spiel- und stoßfreien sowie lärmarmen Wälzvorgang der Kettenglieder in den Antriebsrädern 3 und im Transportelement 2 gewährleisten. Gemäß Fig.2 ist das Transportelement 2 ein bandförmiges Teil, das auf einer Fläche mit, an eine Evolventenverzahnung angepassten, Aufnahmeöffnungen 2.1 ausgestattet ist, die im Ausführungsbeispiel für die Aufnahme der Evolventenverzahnung 1.1.1 an den abtriebsseitigen Zahnflanken 1.1 des, doppelseitig mit Zähnen ausgestatteten, Zahnrads 1, geeignet ist.

Entsprechend Fig.3 ist das Transportelement 2 an seiner unteren Fläche mit beabstandeten Schlitzen 2.2 versehen. Diese sind von besonderem Vorteil wenn eine Anwendungsform des Trägerelements 2 nach Fig. 4 mit einer konvexen oder auch mit einer, in den Zeichnungen nicht näher dargestellten, konkaven Einsatzform vorgesehen ist.

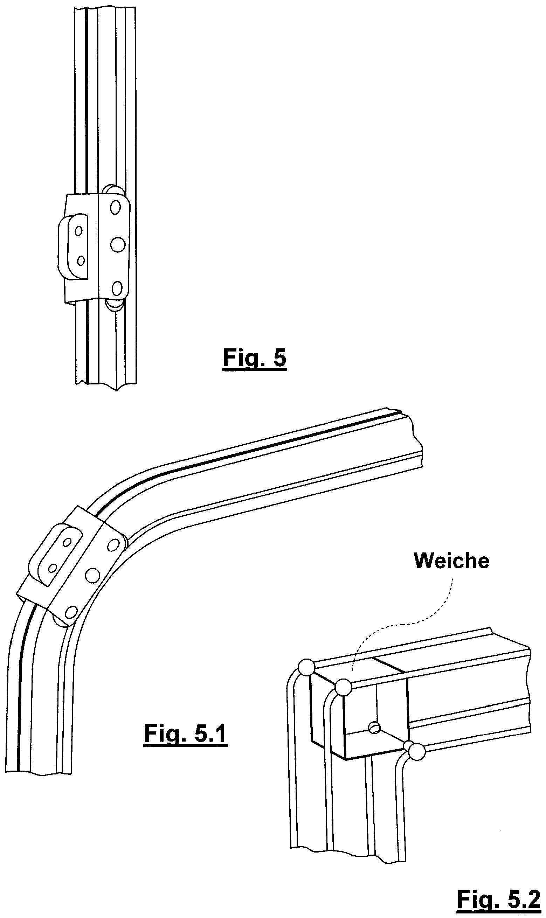

Ein weiteres Ausführungsbeispiel wird prinzipiell gemäß Fig.5 dargestellt. Hierbei handelt es sich um eine dreidimensionale Anwendungsform des erfindungsgemäßen linearen Zahnkettentriebs. Beispielsweise kann der lineare Kettentrieb geradlinig in horizontaler Richtung, in einer x- Achse, in vertikaler Richtung in eine y-Achse und durch entsprechende Weichen, die in den Zeichnungen nur prinzipiell dargestellt sind, wechselseitig eingesetzt werden. Die Weichen sind sehr einfach durch verschieben von Geradteilen oder Bogenteilen in der dritten Richtung in einer z-Achse herzustellen. Diese Anwendungsform ist beispielsweise für Lasten- oder Personenaufzüge etc. besonders geeignet.

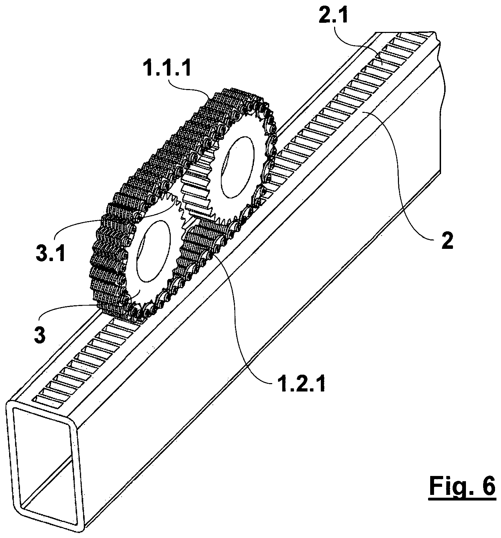

Schließlich ist auch eine weitere Anwendungs- Ausführungsform des erfindungsgemäßen linearen Kettentriebs, gemäß Fig.6, hervorzuheben. Dazu besteht das Transportelement 2 beispielsweise aus einem Vierkantprofil, in dessen eine Fläche Aufnahmeöffnungen 2.1 eingearbeitet sind. Diese Ausführungsform ist beispielsweise für einen Endlosen Linearbetrieb besonders vorteilhaft. Diese Ausführungsform des erfindungsgemäßen Linearkettentriebs eignet sich für Anwendungen, bei denen hoher und ausdauernder Kraftaufwand gepaart mit einer hohen Genauigkeit erforderlich ist. So zum Beispiel ist diese Ausführungsvariante für Gabelstapler, für Transporte in Hochregallagern, aber auch für Präzisionsanwendungen beispielsweise für 3D- Drucker, in CNC - Werkzeugmaschinen und nicht zuletzt bei Robotern einsetzbar.

### Aufstellung der verwendeten Bezugszeichen

1. doppelt verzahnte Zahnkette,
   1.1 abtriebsseitige Zahnflanken,
      1.1.1 Evolventenverzahnung der Zahnkette,
   1.2 antriebsseitige Zahnflanken,
      1.2.1 Spitzenverzahnung der Zahnkette,
2. Transportelement,
   2.1 Aufnahmeöffnungen,
   2.2 Schlitze,
3 Antriebszahnräder,
   3.1 Evolventenverzahnung der Antriebszahnräder

### Aufstellung der verwendeten Bezugszeichen

1. doppelt verzahnte Zahnkette,
   1.1 abtriebsseitige Zahnflanken,
      1.1.1 Evolventen- Verzahnung der Zahnkette,
   1.2 antriebsseitige Zahnflanken,
      1.2.1 Spitzverzahnung der Zahnkette.
2. Transportelement,
   2.1 Aufnahmeöffnungen,
   2.2 Schlitze,
3 Zahnkettenräder,
   3.1 Evolventen- Verzahnung der Zahnkettenräder,

## Patentansprüche

1. Linearer Zahnkettentrieb, aufweisend eine beidseitig verzahnte und flexible Zahnkette (1), ein Transportelement (2) und Zahnkettenräder (3), wobei die Zahnkette (1) abtriebsseitig mit ihren Zahnflanken (1.1) in das Transportelement (2) und antriebsseitig mit Zahnflanken (1.2) einer Spitzverzahnung (1.2.1) in die Zahnkettenräder (3) mit einer Evolventen- Verzahnung (3.1) eingreift, **dadurch gekennzeichnet,**
**dass** die beidseitig verzahnte Zahnkette (1) abtriebsseitig mit Zahnflanken (1.1) einer Evolventen- Verzahnung (1.1.1) ausgestattet und gegenüberliegend antriebsseitig mit Zahnflanken (1.2) der Spitzverzahnung (1.2.1) kombiniert ist und die Zahnflanken (1.1) der Evolventen- Verzahnung (1.1.1) abtriebsseitig in zur Zahnkette (1) gerichteten, auch in Kurvenbereichen symmetrischen Aufnahmeöffnungen (2.1) eines Transportelementes (2) wälzen,
**dass** das Transportelement (2) ein weitest gehend starres Band, in linearer oder gebogener Form, mit den einerseits symmetrischen, nach innen oder außen offenen Aufnahmeöffnungen (2.1) und andererseits mit auf dessen gegenüberliegender Außenfläche quer zu seiner Laufrichtung verlaufenden, voneinander beabstandeten Schlitzen (2.2) ausgestattet ist und wobei das Transportelement (2) in einer starren und einer beweglichen Form nutzbar ist, wobei bei der starren Form der Benutzung das Transportelement (2) feststeht und die beidseitig verzahnte Zahnkette (1) mit dem Antrieb um die Zahnkettenräder (3) zu bewegen ist, und wobei bei der beweglichen Form der Benutzung sich das Transportelement (2) bewegt und die Zahnkette (1) am Ort um die Zahnkettenräder (3) zu bewegen ist,
**dass** während des Bewegungsablaufes im Linearbereich des Kettentriebs die abtriebsseitigen Glieder der Zahnkette (1) mit der Evolventen- Verzahnung (1.1.1) gespreizt sind, im Bogenbereich deckungsgleich zueinander verlaufen und im Übergang vom Bogenbereich zum Linearbereich die abtriebsseitigen Glieder der Zahnkette (1) stoß- und spielfrei in den Aufnahmeöffnungen (2.1) des Transportelementes (2) wälzen, im Linearbereich mehrere gespreizte abtriebsseitige Glieder der Zahnkette (1) geradlinig verlaufen und in Kombination und gleichzeitig die antriebsseitigen Glieder der Zahnkette (1) mit der Spitzverzahnung (1.2.1) geradlinig deckungsgleich und im Bogenbereich gespreizt zueinander verlaufen, und dass im Übergang vom Bogenbereich zum Linearbereich die antriebsseitigen Glieder der Zahnkette (1) stoß- und spielfrei in der Evolventen- Verzahnung (3.1) eines oder mehrerer Zahnkettenräder (3) wälzen.

2. Linearer Zahnkettentrieb, nach Anspruch 1, **dadurch gekennzeichnet,**
**dass** das Transportelement (2) mit den Aufnahmeöffnungen (2.1) in der Fläche eines mehreckigen Profilteils eingeformt ist.

3. Linearer Zahnkettentrieb, nach Anspruch 2, **dadurch gekennzeichnet,**
**dass** das Transportelement (2) mit den Aufnahmeöffnungen (2.1) separat in horizontaler oder vertikaler Richtung oder mit angepassten Weichen von einer horizontalen Richtung in eine vertikale Richtung und umgekehrt anzuordnen und darauf der lineare Kettentrieb zu bewegen ist.

4. Linearer Zahnkettentrieb, nach einem der vorhergehenden Ansprüche, **dadurch gekennzeichnet, dass** das Transportelement (2) mit den Aufnahmeöffnungen (2.1) und Schlitzen (2.2) an alle bekannten doppelt verzahnten Kettenformen und Kettenbreiten anzupassen ist.

5. Linearer Zahnkettentrieb, nach einem der vorhergehenden Ansprüche, **dadurch gekennzeichnet, dass** die Zähne der Zahnkette (1) aus hochveredeltem Stahl bestehen.

## Claims

1. A linear toothed chain gear, having a flexible toothed chain (1) toothed on both sides, a transport element (2) and sprockets (3), wherein the toothed chain (1) engages in the transport element (2) with its tooth flanks (1.1) on the driven side and in the sprockets (3) with involute gear (3.1) with tooth flanks (1.2) of a serrated gear (1.2.1) on the drive side, **characterized in**
**that** the toothed chain (1) toothed on both sides is equipped with tooth flanks (1.1) of an involute gear (1.1.1) on the driven side and is combined opposite that with tooth flanks (1.2) of the serrated gear (1.2.1) on the drive side, and the tooth flanks (1.1) of the involute gear (1.1.1) engage on the driven side in receiving openings (2.1), facing the toothed chain (1) and symmetrical in curved areas too, of a transport element (2),
**that** the transport element (2), a largely rigid strip, in linear or curved form, is equipped with the receiving openings (2.1) symmetrical on one side and open inwards or outwards, and on the other side with slots (2.2) at a distance from one another and extending on its opposite outer face transversely to its running direction, and wherein the transport element (2) is usable in a rigid and in a moving form, wherein in the rigid form of use the transport element (2) is fixed and the toothed chain (1) toothed on both sides must be moved about the sprockets (3) with the drive, and wherein in the moving form of use the transport element (2) moves and the toothed chain (1) must be moved about the sprockets (3) at that point,
**that** during the movement sequence the driven-side links of the toothed chain (1) with involute gear (1.1.1) are expanded in the linear region of the chain drive, extend congruently to one another in the curved region, and in the transition from the curved region to the linear region said driven-side links of the toothed chain (1) engage smoothly and without clearance in the receiving openings (2.1) of the transport element (2), and several driven-side expanded links of the toothed chain (1) extend in a straight line and in combination in the linear region and at the same time the drive-side links of the toothed chain (1) with serrated gear (1.2.1) extend congruently in a straight line and expanded relative to one another in the curved region, and that in the transition from the curved region to the linear region the drive-side links of the toothed chain (1) engage smoothly and without clearance in the involute gear (3.1) of one or more sprockets (3).

2. The linear toothed chain gear according to claim 1, **characterized in that** the transport element (2) with the receiving openings (2.1) is formed in the surface of a polygonal section part.

3. The linear toothed chain gear according to claim 2, **characterized in that** the transport element (2) with the receiving openings (2.1) must be arranged separately in the horizontal or vertical direction or with adapted change points from a horizontal direction into a vertical direction and vice versa, and the linear chain drive must be moved thereon.

4. The linear toothed chain gear according to any of the preceding claims, **characterized in that** the transport element (2) with the receiving openings (2.1) and slots (2.2) must be adapted to all known double-toothed chain forms and chain widths.

5. The linear toothed chain gear according to any of the preceding claims, **characterized in that** the teeth of the toothed chain (1) consist of high-grade steel.

## Revendications

1. Engrenage à chaîne dentée linéaire, présentant une chaîne dentée (1) flexible, dentée des deux côtés, un élément de transport (2) et des roues de chaîne dentée (3), sachant que la chaîne dentée (1) s'engage côté sortie au niveau de ses flancs de dents (1.1) dans l'élément de transport (2) et côté entraînement au niveau de ses flancs de dents (1.2) d'une denture pointue (1.2.1) dans les roues de chaîne dentée (3) avec une denture en développante (3.1), **caractérisé en ce**
**que** la chaîne dentée (1) des deux côtés est équipée côté sortie de flancs de dents (1.1) d'une denture en développante (1.1.1) et est combinée en face, côté entraînement, à des flancs de dents (1.2) de la denture pointue (1.2.1) et que les flancs de dents (1.1) de la denture en développante (1.1.1) taillent côté sortie dans des orifices de logement (2.1) d'un élément de transport (2), orientés vers la chaîne dentée (1), symétriques également dans les sections courbes,
**que** l'élément de transport (2), une bande majoritairement fixe sous forme linéaire ou courbée est équipée, d'une part, des orifices de logement (2.1) symétriques, ouverts vers l'intérieur ou l'extérieur et, d'autre part, de fentes (2.2) éloignées les unes des autres, s'étendant sur sa surface extérieure opposée, perpendiculairement à son sens de marche, et sachant que l'élément de transport (2) est utilisable dans une forme fixe et une forme mobile, sachant que dans le cas de la forme fixe de l'utilisation, l'élément de transport (2) est immobile et la chaîne dentée (1) des deux côtés doit être déplacée avec l'entraînement autour des roues de chaîne dentée (3), et sachant que dans le cas de la forme mobile de l'utilisation, l'élément de transport (2) se déplace et la chaîne dentée (1) sur place doit être déplacée autour des roues de chaîne dentée (3),
**que** pendant le déroulement du mouvement dans la zone linéaire de l'engrenage à chaîne, les maillons de la chaîne dentée (1) côté sortie, avec la denture à développante (1.1.1) sont écartés, s'étendent de manière à coïncider mutuellement dans la zone de fond et que dans la transition de la zone de fond à la zone linéaire, les maillons de la chaîne dentée (1) côté sortie taillent sans choc ni jeu dans les orifices de logement (2.1) de l'élément de transport (2), que plusieurs maillons de la chaîne dentée (1) situés côté sortie et écartés s'étendent en ligne droite dans la zone linéaire, qu'en combinaison et simultanément, les maillons de la chaîne dentée (1) côté entraînement, avec la denture pointue (1.2.1) s'étendent en ligne droite, de manière à coïncider et s'étendent écartés les uns des autres dans le fond, et que dans la transition de la zone de fond à la zone linéaire, les maillons de la chaîne dentée (1) côté entraînement taillent sans choc ni jeu dans la denture en développante (3.1) d'une ou de plusieurs roues de chaîne dentée (3).

2. Engrenage à chaîne dentée linéaire selon la revendication 1, **caractérisé en ce que** l'élément de transport (2) avec ses orifices de logement (2.1) est moulé dans la surface d'une pièce de profil polygonale.

3. Engrenage à chaîne dentée linéaire selon la revendication 2, **caractérisé en ce que** l'élément de transport (2) doit être disposé au niveau de ses orifices de logement (2.1) séparément dans le sens horizontal ou vertical ou au niveau d'aiguillages adaptés d'un sens horizontal à un sens vertical et inversement, et que l'engrenage à chaîne linéaire doit être déplacé dessus.

4. Engrenage à chaîne dentée linéaire selon l'une des revendications précédentes, **caractérisé en ce que** l'élément de transport (2) doit être adapté au niveau de ses orifices de logement (2.1) et fentes (2.2) à toutes les formes et largeurs de chaînes connues à doubles dents.

5. Engrenage à chaîne dentée linéaire selon l'une des revendications précédentes, **caractérisé en ce que** les dents de la chaîne dentée (1) sont en acier hautement affiné.
